# EUROPEAN PATENT APPLICATION

(11) **EP 4 825 824 A1**
(43) Date of publication of application: **21.10.2026**
(21) Application number: 24903799.5
(22) Date of filing: 13.12.2024
(51) Int. Cl.: C04B 28/26, B09B 3/25, B09B 5/00, C04B 18/08

(54) **METHOD FOR PRODUCING SELF-HARDENING MATERIAL**

(30) Priority: 13.12.2023 JP 2023210578
(71) Applicant: Obayashi Corporation, Tokyo 108-8502 (JP); Nagoya Institute Of Technology, Nagoya-shi, Aichi 466-8555 (JP); National University Corporation Hokkaido University, Hokkaido 060-0808 (JP); Sika Technology AG, 6340 Baar (CH)
(72) Inventor: HITOMI, Takashi, Kiyose-shi, Tokyo 204-8558 (JP); TAGUCHI, Nobuko, Kiyose-shi, Tokyo 204-8558 (JP); SHIRAI, Takashi, Nagoya-shi, Aichi 466-8555 (JP); SUGIYAMA, Takafumi, Sapporo-shi, Hokkaido 060-0808 (JP); SAITOH, Kaname, Tokyo 107-0051 (JP)
(74) Representative: karo IP
(86) International application number: PCT/JP2024/044294
(87) International publication number: WO 2025/127146

(57) **Abstract**

[OBJECT] To improve workability.

[SOLUTION] A method for producing a self-hardening material, includes: a first step of subjecting fly ash to unburned carbon removal treatment to produce unburned carbon removal-treated fly ash; a second step of subjecting the unburned carbon removal-treated fly ash to mechanochemical treatment to activate a surface of the unburned carbon removal-treated fly ash; a third step of mixing a strong alkaline solution and silicon fine powder to prepare a silicon mixture in which a silicon component is dissolved in the strong alkaline solution; and a fourth step of mixing the unburned carbon removal-treated fly ash whose surface has been activated and the silicon mixture.

## Description

### [Technical Field]

The present disclosure relates to a method for producing a self-hardening material.

### [Background Art]

As self-hardening materials such as cement paste, mortar, concrete, and the like, cement-based materials such as ordinary Portland cement are widely used. Further, self-hardening materials using coal ash (fly ash) as a base material instead of cement-based materials have been developed. For example, Patent Literature 1 discloses that a highly dense self-hardening material can be obtained by mixing fly ash whose surface has been activated by mechanochemical treatment with a mixture obtained by mixing a strong alkaline solution and silicon powder.

### [Citation List]

### [Patent Literature]

[PTL 1] Japanese Patent Application Publication No. 2015-218070

### [Summary of Invention]

### [Technical Problem]

However, when producing a self-hardening material using coal ash, there were issues in workability, such as a desire to improve flowability.

The present disclosure has been made in view of such nan issue, and is directed to improvement in workability.

### [Solution to Problem]

A main aspect of the present disclosure is a method for producing a self-hardening material, comprising: a first step of subjecting fly ash to unburned carbon removal treatment to produce unburned carbon removal-treated fly ash; a second step of subjecting the unburned carbon removal-treated fly ash to mechanochemical treatment to activate a surface of the unburned carbon removal-treated fly ash; a third step of mixing a strong alkaline solution and silicon fine powder to prepare a silicon mixture in which a silicon component is dissolved in the strong alkaline solution; and a fourth step of mixing the unburned carbon removal-treated fly ash whose surface has been activated and the silicon mixture.

Other features of the present disclosure will become apparent from the description in the present specification and the accompanying drawings.

### [Advantageous Effects of Invention]

According to the present disclosure, it is possible to improve workability.

### [Brief Description of Drawings]

Fig. 1 is an electron microscope (SEM) image of unburned carbon in coal ash.
Fig. 2 is a flow diagram of a method of producing a self-hardening material in an embodiment of the present disclosure.
Fig. 3 is a schematic diagram illustrating how a hardened body is formed.
Fig. 4 is a diagram illustrating a relationship between heating temperature and unburned carbon content.
Fig. 5 is a diagram illustrating a list of test materials.
Fig. 6 is a diagram illustrating compositions of test pieces.
Figs. 7A to 7F are diagrams illustrating measurement results of particle size distribution.
Fig. 8 is a diagram illustrating measurement results of pH.
Fig. 9 is a diagram illustrating measurement results of electrical conductivity.
Fig. 10 is a diagram illustrating measurement results of simple flow of paste after mixing.
Figs. 11A to 11E are diagrams illustrating changes in viscosity over time from after mixing to solidification.
Fig. 12 is a diagram illustrating measurement results of compressive strength.
Fig. 13 is a diagram illustrating measurement results of shape change rate.
Fig. 14 is a diagram illustrating appearance of test pieces.

### [Description of Embodiments]

At least following matters will become apparent from the descriptions of the present specification and the accompanying drawings.

### (Aspect 1)

A method for producing a self-hardening material, comprising: a first step of subjecting fly ash to unburned carbon removal treatment to produce unburned carbon removal-treated fly ash; a second step of subjecting the unburned carbon removal-treated fly ash to mechanochemical treatment to activate a surface of the unburned carbon removal-treated fly ash; a third step of mixing a strong alkaline solution and silicon fine powder to prepare a silicon mixture in which a silicon component is dissolved in the strong alkaline solution; and a fourth step of mixing the unburned carbon removal-treated fly ash whose surface has been activated and the silicon mixture.

According to a method for producing a self-hardening material of Aspect 1, it is possible to achieve improvement in workability.

### (Aspect 2)

In the method for producing a self-hardening material according to Aspect 1, it is desirable that, in the first step, a content rate of the unburned carbon in the unburned carbon removal-treated fly ash is 1% or less.

According to the method for producing a self-hardening material of Aspect 2, flow (flowability) after mixing can be improved.

### (Aspect 3)

In the method for producing a self-hardening material according to Aspect 1, it is desirable that the unburned carbon removal treatment is heating treatment of heating the fly ash.

According to the method for producing a self-hardening material of Aspect 3, unburned carbon can be easily removed (reduced) by heating the fly ash.

### (Aspect 4)

In the method for producing a self-hardening material according to Aspect 3, it is desirable that the heating treatment is performed within 1 hour using a heating apparatus.

According to the method for producing a self-hardening material of Aspect 4, the unburned carbon in the fly ash can be removed (reduced).

### (Aspect 5)

In the method for producing a self-hardening material according to Aspect 3, it is desirable that a temperature of the heating treatment is 500°C or higher and 600°C or lower.

According to the method for producing a self-hardening material of Aspect 5, flow (flowability) after mixing can be improved.

### (Aspect 6)

In the method for producing a self-hardening material according to Aspect 1, it is desirable that a ratio of the strong alkaline solution to a binder containing the unburned carbon removal-treated fly ash and the silicon fine powder is 25% or more and 40% or less.

According to the method for producing a self-hardening material of Aspect 6, strength of a hardened body can be improved.

### (Aspect 7)

In the method for producing a self-hardening material according to Aspect 6, it is desirable that a proportion of the unburned carbon removal-treated fly ash in the binder is 90% or more.

According to the method for producing a self-hardening material of Aspect 7, strength of the hardened body can be improved.

### (Aspect 8)

In the method for producing a self-hardening material according to Aspect 1, it is desirable that a silicon concentration in the silicon fine powder is 40,000 PPM or more.

According to the method for producing a self-hardening material of Aspect 8, strength of the hardened body can be improved.

### (Aspect 9)

In the method for producing a self-hardening material according to any one of Aspects 1 to 8, it is desirable that the self-hardening material does not contain cement.

According to the method for producing a self-hardening material of Aspect 9, it is possible to form a hardened body without using cement (cementless hardened body).

### === Embodiment(s) ===

Hereinafter, an embodiment of the present disclosure will be described. The present inventors and the like have proposed that a cementless self-hardening material can be produced using coal ash as a base material, by subjecting coal ash (fly ash) to mechanochemical treatment to activate the surface of the coal ash and, allowing an alkaline solution to act thereon to thereby dissolve the activated surface and bond the surfaces together (see Patent Literature 1). By this technique industrial by-product (for example, coal ash generated when coal is burned in a thermal power plant) can be utilized for producing a self-hardening material. However, when producing a self-hardening material using coal ash, there have been issues in workability, such as a desire to improve flowability.

Incidentally, coal ash as an industrial by-product usually contains several percent (for example, about 5%) by weight of unburned carbon.

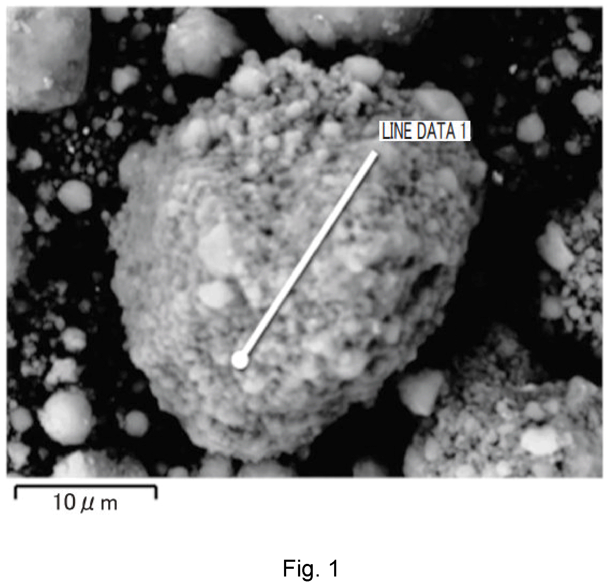

Fig. 1 is an electron microscope (SEM) image of unburned carbon in coal ash. As in the SEM image of Fig. 1, states in which particles of coal ash were embedded in lumps of unburned carbon were observed(here and there). This unburned carbon is presumed to affect flowability, and thus in the present application, it has been conceived to remove unburned carbon contained in coal ash.

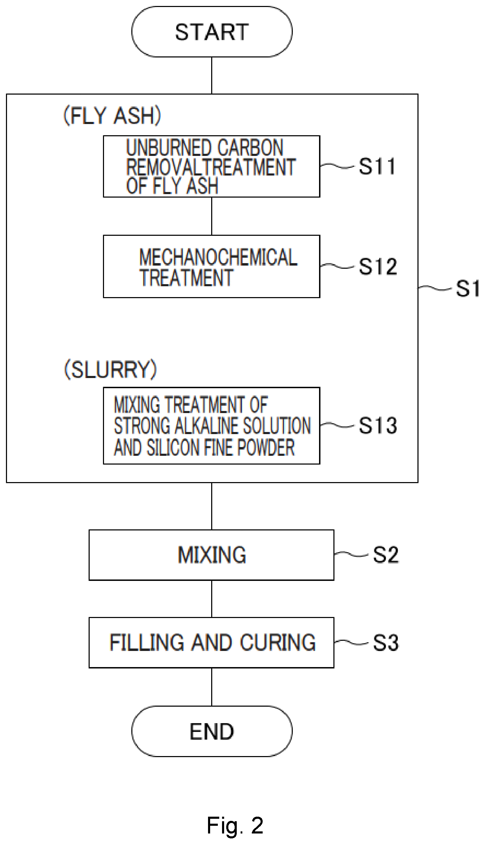

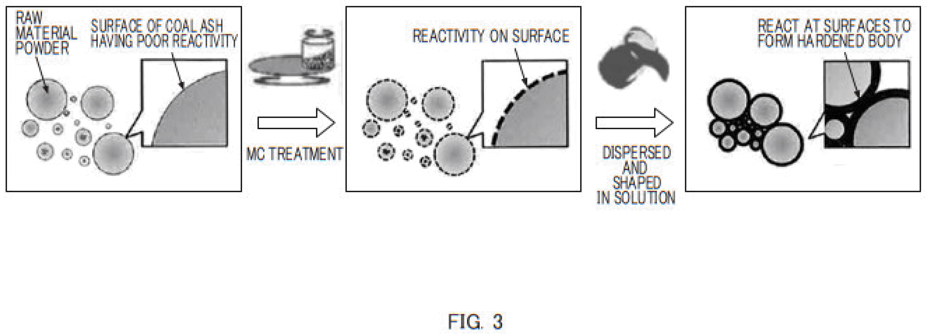

Fig. 2 is a flow diagram of a method for producing a self-hardening material in an embodiment of the present disclosure. Further, Fig. 3 is a schematic diagram illustrating how a hardened body is formed.

In a material preparation process (S1), coal ash (fly ash) is subjected to an unburned carbon removal treatment (S11: corresponding to a first step). In an example described later, heating treatment by a heating apparatus (electric furnace) is adopted as a method for removing unburned carbon in coal ash. In an embodiment of the present disclosure, "removal" of unburned carbon does not mean completely removing unburned carbon from coal ash, but means reducing (lowering) a content rate of unburned carbon in coal ash. As described later, even in the coal ash subjected to unburned carbon removal treatment, a small amount of unburned carbon is contained.

Next, mechanochemical treatment (S12: corresponding to a second step) for activating the surface of the coal ash after unburned carbon removal treatment (unburned carbon removal-treated fly ash). Hereinafter, mechanochemical treatment is also referred to as "MC treatment" or "grinding treatment." By this mechanochemical treatment, as illustrated in the center of Fig. 3, reactivity is imparted to the surfaces of particles (here, coal ash) having poor reactivity.

Note that mechanochemical treatment refers to a treatment in which mechanical processing such as impact, shearing and friction is applied to a solid substance to impart chemical properties (reactivity) of the substance. Further, component homogenization can be achieved by grinding particles. Examples of apparatuses capable of performing such a treatment include, for example, mixing apparatuses such as a ball mill, a vibration mill, a planetary ball mill, and a media stirring mill, grinding machines such as a ball media mill, a roller mill, and a mortar, a jet mill, and the like. In an example described later, a planetary ball mill is used.

Further, in the material preparation process (S1), premixing treatment (S13: corresponding to a third step) is performed in which a strong alkaline solution and silicon fine powder are mixed to form a slurry. As a result, a silicon mixture (hereinafter, also referred to as slurry) is prepared in which a silicon component is dissolved in the strong alkaline solution. Note that the silicon fine powder and the strong alkaline solution serve to bond coal ash (fly ash) particles to each other. In the present embodiment, silica fume whose main component is amorphous silica is used as the silicon fine powder, but it is not limited thereto, and any material may be used as long as it can supply a dissolved silicon element in the presence of alkali.

Next, in a mixing process of respective materials (S2: corresponding to a fourth step), the coal ash subjected to the unburned carbon removal treatment having an activated surface and the silicon mixture (slurry) are mixed together.

Then, in a filling/curing process (S3), the mixture is filled into a mold and cured. Thus, as illustrated on the right side of Fig. 3, the surfaces of the coal ash react with each other in the solution, and a hardened body is thereby formed. Note that the silica fume in a state dissolved in the slurry serves to fill gaps between the coal ash.

As such, in an embodiment of the present disclosure, unburned carbon contained in coal ash is removed by performing the unburned carbon removal treatment (step S11). Then, mechanochemical treatment is performed using the coal ash after the unburned carbon removal treatment, and the treated coal ash is mixing with the slurry. Thus, it has been confirmed that flowability (flow) in a fresh state can be improved, and workability can be enhanced (see Examples described later).

### <<<Examples>>>

### <<Relationship between Heating Temperature and Unburned Carbon Content>>

As described above, in this example, heating treatment is adopted as a method for removing unburned carbon in coal ash. In order to grasp a relationship between a removal ratio of unburned carbon and heating temperature, a heating test of coal ash using an electric furnace was conducted. As the coal ash, coal ash of Isogo Thermal Power Plant (obtained in August 2018 (3rd time), hereinafter, Isogo 3) was used. Further, the heating treatment was carried out at a predetermined temperature using an electric furnace manufactured by Isuzu Seisakusho Co., Ltd. Note that the heating time is desirably 1 hour or less, and was set to 1 hour in this example.

Fig. 4 is a diagram illustrating a relationship between heating temperature and unburned carbon content. The horizontal axis of the figure represents heating temperature (°C), and the vertical axis represents unburned carbon content (%: content rate of unburned carbon).

In Fig. 4, the unburned carbon content in coal ash is about 4% when the heating temperature is 400°C or lower, but changes (decreases) sharply between 500°C and 600°C. Specifically, the unburned carbon content is about 1% at 500°C, about 0.3% at 550°C, and about 0.1% at 600°C.

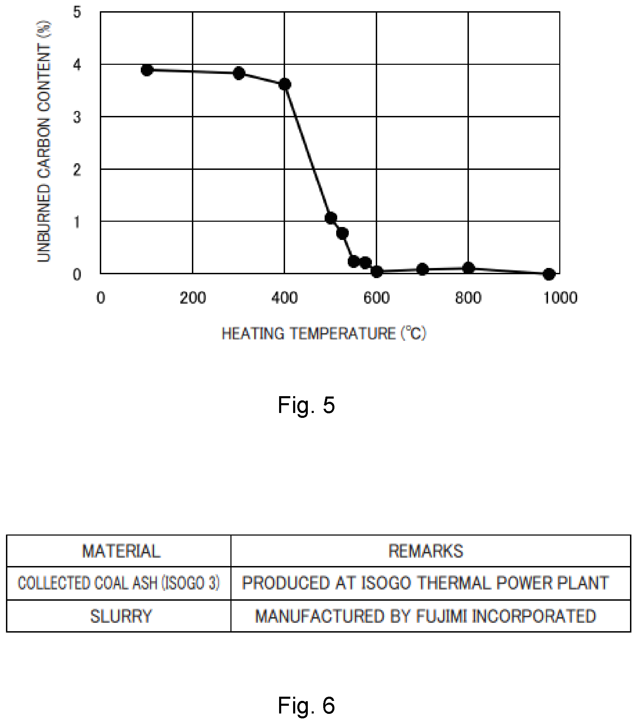

Accordingly, in this example, when preparing test pieces, heating conditions were varied in the range of 400°C and 700°C, and as a comparative example, a condition without unburned carbon removal treatment (no heating) was also set (see Fig. 6).

### <<Test Materials and Preparation of Test Pieces>>

Fig. 5 is a diagram illustrating a list of test materials.

As illustrated in the figure, coal ash (fly ash) used was collected dust ash (Isogo 3) from the Isogo Thermal Power Plant. Further, as mixing water, a slurry (manufactured by Fujimi Incorporated) was used in which silica fume (SF) was partially dissolved in potassium hydroxide (KOH solution: strong alkaline solution) having a concentration of 3 mol/L so that a dissolved silicon concentration was 40,000 ppm. Note that the silicon concentration is more desirably 40,000 ppm or higher. Accordingly, the strength of the hardened body of the self-hardening material is further improved.

Fig. 6 is a diagram illustrating the compositions of test pieces. The heating temperature in the figure is the temperature in the unburned carbon removal treatment (step S11: here, heating treatment) of the coal ash. Note that the heating apparatus and heating time are the same as the conditions of the heating test (Fig. 4) (heating for 1 hour using an electric furnace).

Although not illustrated in the figure, at each level, conditions for mechanochemical treatment (step S12) of the coal ash were also varied. The mechanochemical treatment was performed in a dry manner using a planetary ball mill. As the planetary ball mill, a P-5 type manufactured by FRITSCH was used, and the rotation speed was set to 300 rpm. Grinding conditions (grinding time) were set to 0 hours (no grinding), 1 hour, 2 hours, 3 hours, 4 hours, and 6 hours (conventionalexamples).

Test pieces made of paste hardened bodies were prepared with the compositions illustrated in Fig. 6. A ratio of mixing water to binder (W/B) is desirably 25% or more and 40% or less, and was set to 32.5% at which high compressive strength is stably obtained thereamong. Note that the binder (B) includes coal ash (fly ash) and silica fume (SF). A proportion of coal ash in the binder (B) is desirably 90% or more.

Regarding preparation of test pieces, after step S1 in Fig. 2, in step S2, the coal ash (fly ash) and the slurry were mixed using a mixer for about 1 minute, and in step S3, the mixture was cast (filled) into a cylindrical mold (diameter 20 mm, height 40 mm). The cast paste was demolded after being sealed and cured for 2 days in a constant-temperature chamber at 40°C, and was subjected to dry curing for 5 days under a condition of 40°C.

### <<Test Content and Test Method>>

### <Appearance Observation and Particle Size Distribution of Coal Ash after Grinding Treatment>

A portion of the coal ash after grinding treatment (step S12) was taken out, and its appearance was observed and particle size distribution was measured using MT3000 manufactured by MicrotracBEL Corp.

### <Measurement of pH and Electrical Conductivity>

Referring to a test method of The Japanese Geotechnical Society, coal ash and ion-exchanged water were fixed at a solid-liquid ratio of 1:5, and pH and electrical conductivity of the suspension were measured.

### <Simple Flow Measurement of Paste Immediately After Mixing>

A portion of the paste immediately after mixing (immediately after step S2) was collected, and a simple flow test was conducted. In this test, the paste was filled into an acrylic cell (inner diameter 28 mm, height 22 mm) for epoxy fixation of SEM observation materials placed on a stainless steel plate, the acrylic cell was quickly lifted, and regarding a spreading state of the paste, a major axis and a minor axis thereof were measured, and an average value thereof was taken as flow.

### <Change in Fresh State after Mixing>

To grasp a fresh state from immediately after mixing, a change in viscosity of the paste over time was measured using a rheometer (viscometer). As the rheometer, a rotational rheometer KINEXUS Lab+ manufactured by Malvern Panalytical Ltd. was used. In the rheometer, the paste was sandwiched between stainless steel disks having a diameter of 3 cm, with a gap (thickness of paste) of 1 mm, and a shear strain of 0.2% was applied at a frequency of 5 Hz, and measurement was performed based on a response of the paste. A sampling interval was set to 10 seconds.

### <Measurement of Compressive Strength and Dimensional Change Rate of Paste Hardened Body>

Compressive strength was measured using test pieces at a material age of 7 days (2 days of sealed curing, 5 days of dry curing). The number of test pieces per level was 3. Autograph manufactured by Shimadzu Corporation was used for the compressive strength test.

The dimensional change rate was obtained using a diameter at a material age of 2 days as a denominator and a difference between the material age of 7 days and the material age of 2 days (diameter at a material age of 7 days - diameter at a material age of 2 days) as a numerator. That is, the dimensional change rate being negative indicates that shrinkage of the test piece has occurred along with hardening, and the dimensional change rate being positive indicates that the test piece has expanded along with hardening. As a calculation method of the diameter, lengths at two orthogonal locations were measured regarding a diameter in a circumferential direction of the test piece, and an average thereof was taken as the diameter.

### <<Test Results>>

### <Regarding Appearance Observation and Particle Size Distribution of Coal Ash after Grinding Treatment>

The coal ash was gray, and changed to a light ocher color when heated. Furthermore, a brownish color tone became more pronounced by grinding treatment with the planetary ball mill.

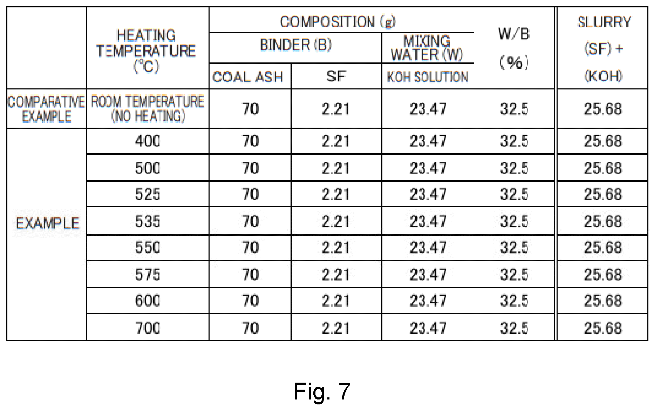

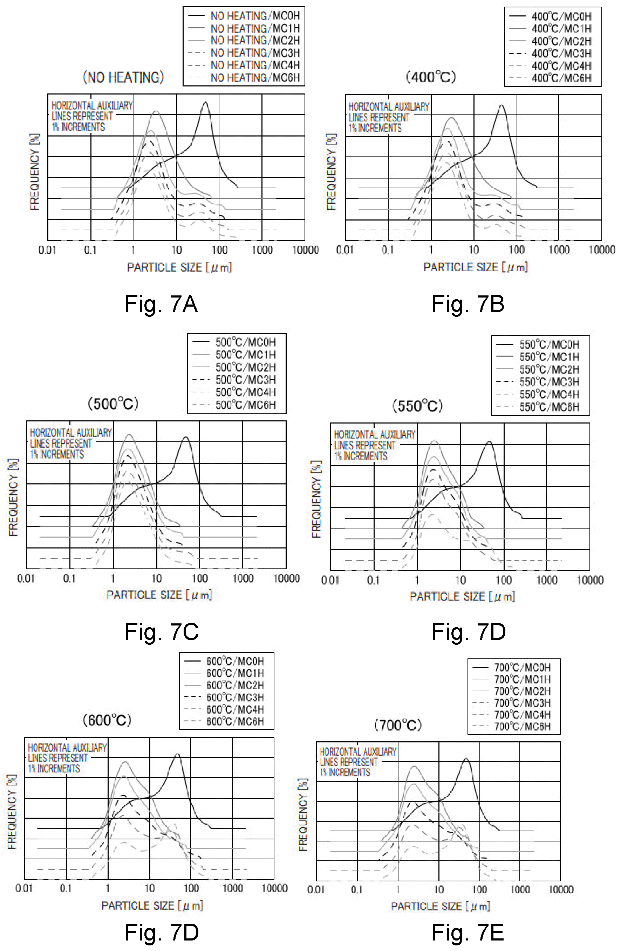

Figs. 7A to 7F are diagrams illustrating measurement results of particle size distribution. The horizontal axis of each figure represents particle size (µm), and the vertical axis represents frequency (%). Note that Fig. 7A illustrates particle size distribution in the case of no-heating (comparative example), Fig. 7B illustrates the case of 400°C, Fig. 7C illustrates the case of 500°C, Fig. 7D illustrates the case of 550°C, Fig. 7E illustrates the case of 600°C, and Fig. 7F illustrates the case of 700°C. Further, in each figure (each heating temperature), time of mechanochemical treatment (grinding treatment) is denoted as MC. For example, MC0H indicates no grinding, and MC1H indicates grinding for 1 hour (the same applies in the following figures).

Note that in the figures, considering visibility, values of the vertical axis of each level are shifted by 0.5% (for example, at particle sizes of 0.1 µm and 1000 µm, values of each level are shifted by 0.5%, but actually, they are all substantially the same).

As illustrated in Fig. 7A, coal ash without heating and without grinding (no-heating/MC0H) had a particle size distribution centered around a peak having a particle size of about 50 µm, but with grinding for 1 hour, the peak moved to about 4 µm along with particle refinement, and with grinding for 2 hours, a new distribution appeared having peaks at about 3 µm and about 30 µm. Thereafter, with an increase in grinding time, the distribution having a peak at about 30 µm increased.

A similar tendency in Fig. 7A was observed in the case of 400°C heating (Fig. 7B).

In 500°C heating (Fig. 7C), a distribution having a peak at a particle size of about 2.5 µm appeared with grinding for 1 hour (MC1H). Even with an increase in grinding time, a similar tendency was observed, with little change in the shape of particle size distribution and only a slight increase in the coarse particle fraction.

In 550°C heating (Fig. 7D), the distribution having a peak at a particle size of about 2.5 µm is the same, but when grinding time was increased, the distribution having a peak of 2.5 µm became smaller, and a distribution having a peak at a particle size of about 30 µm appeared.

At 600°C or higher, as illustrated in Figs. 7E and 7F, the distribution having a peak at a particle size of about 30 µm became dominant.

Thus, as the content rate of unburned carbon decreased (in other words, as the heating temperature increased), the particle size distribution due to grinding changes, and at 550°C or higher, a particle size distribution different from that of the coal ash without unburned carbon removal (without heating) was obtained.

Note that the new peak appeared when the grinding time was increased (a peak around about 30 µm) is considered to be due to the following reason. That is, although particles themselves become smaller in diameter by grinding in mechanochemical treatment, reactivity is imparted to the surfaces of particles (here, coal ash) having poor reactivity, and it is considered that small-diameter particles whose surfaces have been imparted with reactivity aggregated to form large agglomerates.

### <Measurement Results of pH>

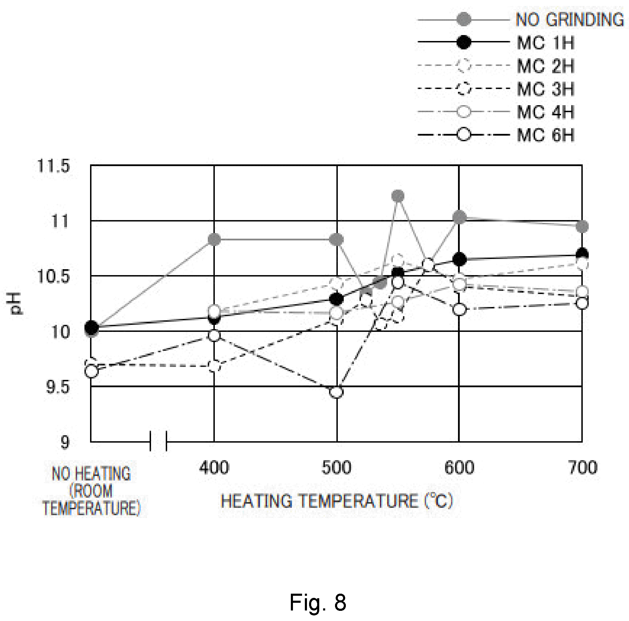

Fig. 8 is a diagram illustrating measurement results of pH. The horizontal axis of Fig. 8 represents heating temperature (°C) of unburned carbon removal treatment, and the vertical axis represents pH.

From Fig. 8, such a result was obtained that coal ash treated at a higher heating temperatures exhibited higher pH values. Further, as the grinding time increased, variation was larger, but pH tended to decrease.

### <Measurement Results of Electrical Conductivity>

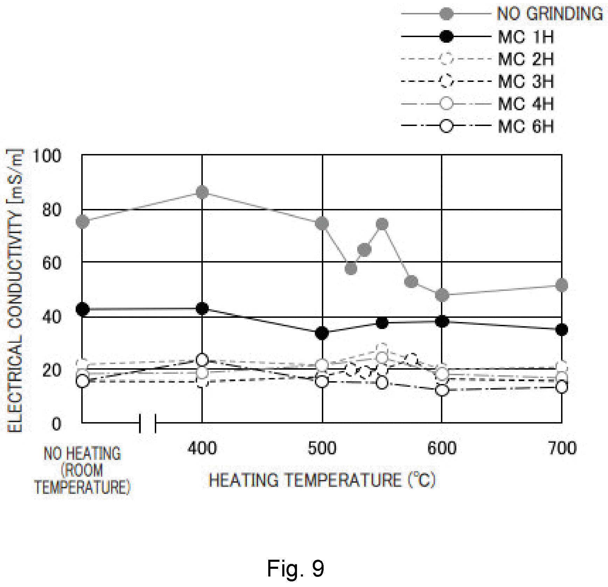

Fig. 9 is a diagram illustrating measurement results of electrical conductivity. The horizontal axis of Fig. 9 represents heating temperature (°C) of unburned carbon treatment removal treatment, and the vertical axis represents electrical conductivity (mS/m).

In the case of no grinding, the coal ash heated at 600°C had a value of electrical conductivity lower by about 25 mS/m than the non-heated coal ash.

With grinding treatment for 1 hour (MC1H) electrical conductivity became generally lower compared to "no grinding,", and the difference due to heating temperature became small.

With grinding treatment for 2 hours (MC2H) or longer, electrical conductivity became even lower than that with grinding treatment for 1 hour, and became substantially the same value regardless of heating temperature and grinding time.

### <Measurement Results of Simple Flow>

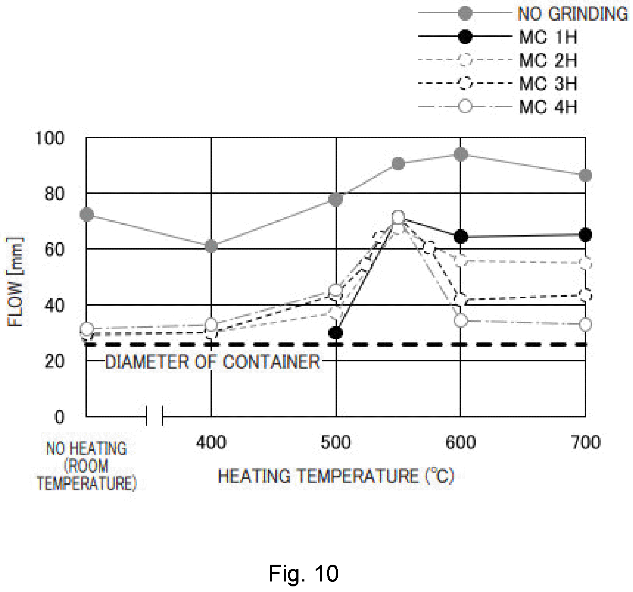

Fig. 10 is a diagram illustrating measurement results of simple flow of paste after mixing. The horizontal axis of Fig. 10 represents heating temperature (°C) of unburned carbon removal treatment, and the vertical axis represents flow (mm). Further, a dotted line at 28 mm in the figure indicates a diameter of a container for flow measurement. Note that the paste subjected to the grinding treatment for 6 hours (MC6H) had extremely high viscosity, making it impossible to measure flow and prepare test pieces. Further, regarding non-heating and 400°C heating with the grinding treatment for 1 hour (MC1H) as well, similarly, viscosity was extremely high, making it impossible to measure flow and prepare test pieces.

In the case of no grinding, high flowability of 60 mm or more was obtained, and particularly in the case of 600°C heating, a large value of 94.3 mm was observed. This is considered to be because coal ash does not have binding properties and the content of carbon (unburned carbon) was extremely low due to high-temperature heat treatment.

When grinding treatment was applied, the flow decreased, but when heating treatment exceeded 400°C, the flow increased and reached a maximum (peak) at about 550°C. Note that when the heating temperature was 600°C or higher, the magnitude of flow tended to decrease as the grinding time increased, and with grinding treatment for 4 hours, a result of substantially no flowability was obtained.

From this result, it was confirmed that the flow can be improved (workability can be improved) by setting the heating temperature for unburned carbon removal to about 550°C (in other words, unburned carbon content to about 0.3%). Since the flow is lower at 600°C or higher as compared to the flow at 550°C, it is considered better not to remove all unburned carbon but to leave a small amount thereof.

### <Change in Fresh State>

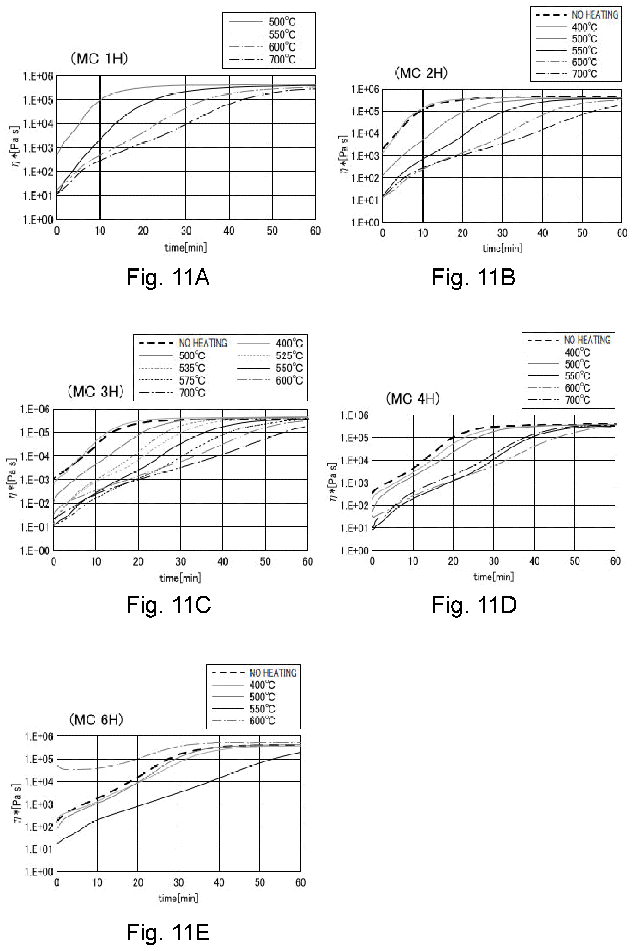

Figs. 11A to 11E are diagrams illustrating changes in viscosity over time from after mixing to solidification. The horizontal axis of each figure is time (minutes), and the vertical axis is viscosity η (Pa·s). Note that Fig. 11A illustrates the case of grinding treatment for 1 hour, Fig. 11B illustrates the case of grinding treatment for 2 hours, Fig. 11C illustrates the case of grinding treatment for 3 hours, Fig. 11D illustrates the case of grinding treatment for 4 hours, and Fig. 11E illustrates the case of grinding treatment for 6 hours, respectively.

In the case of grinding treatment for 1 hour (Fig. 11A), those without heating and with 400°C heating (those having a large content rate of unburned carbon) exhibited stiffening occurred immediately after mixing, and measurement could not be performed. In other pastes (heating at 500 to 700°C), it was observed that viscosity tended to decrease in accordance with a rise in heating temperature.

In the case of grinding treatment for 2 hours (Fig. 11B), compared to grinding treatment for 1 hour (Fig. 11A), viscosity decreased overall. Those without heating and with 400°C heating had high viscosity immediately after mixing, and reached a hardened state in about 5 minutes. In the case of heating at 500°C or higher, viscosity gradually decreased in accordance with a rise in heating temperature, and those with heating at 600°C and 700°C, substantially the same change in viscosity over time was observed up to about 20 minutes after mixing.

In the case of grinding treatment for 3 hours (Fig. 11C), compared to the case of grinding treatment for 2 hours (Fig. 11B), viscosity tended to further decrease overall.

In the case of grinding treatment for 4 hours (Fig. 11D), a decrease in viscosity was observed at heating temperatures of 500°C or lower, but at heating temperatures higher than that, change in viscosity over time that is substantially similar to that in the case of grinding treatment for 3 hours (Fig. 11C) was obtained.

In the case of grinding treatment for 6 hours (Fig. 11E), compared to the case of grinding treatment for 4 hours (Fig. 11D), viscosity was higher overall, and particularly in 600°C heating, viscosity was high from immediately after mixing, and casting into a mold became difficult.

From these results, it can be seen that regarding the time of grinding treatment, 6 hours (conventional example) is too long, and around 3 hours is suitable. Also, it was confirmed that by performing heating at 500°C or higher (in other words, reducing the content rate of unburned carbon to 1% or less), time until the paste hardens can be significantly extended (workability can be improved) compared to the case without heating.

### <Measurement Results of Compressive Strength>

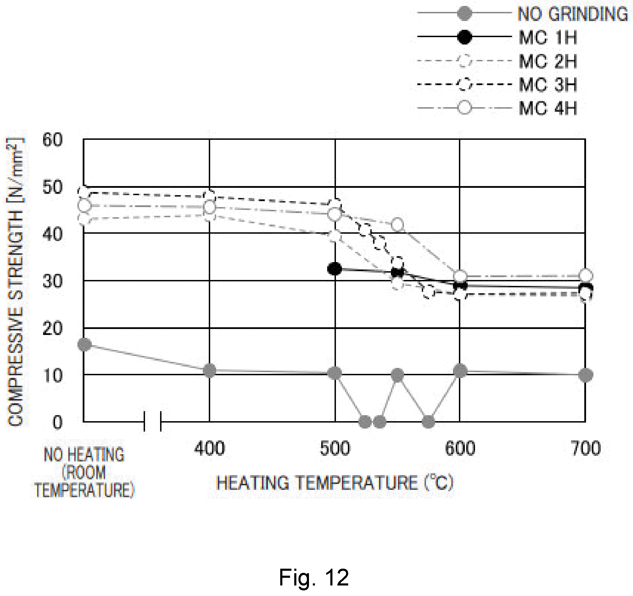

Fig. 12 is a diagram illustrating measurement results of compressive strength. The horizontal axis of Fig. 12 represents heating temperature (°C) of unburned carbon removal treatment, and the vertical axis represents compressive strength (N/mm²).

Regarding test pieces without grinding, the compressive strength reached a maximum of 17 N/mm² without heating, and with heating, it remained at about 10 N/mm² at most.

In the case of grinding treatment for 1 hour (MC1H), without heating (non-heating) and with 400°C heating, the viscosity of the paste was extremely high, and preparation of test pieces was difficult.

The coal ash subjected to other grinding treatments (MC2H to 4H) all exhibited substantially similar compressive strength. Specifically, without heating, the compressive strength was slightly less than 50 N/mm², the compressive strength slightly decreased as the heating temperature rose, decreased sharply when the temperature exceeded 500°C, and reached 30 N/mm² at 600°C and 700°C. Note that the compressive strength for use as a construction material (20 N/mm²) is secured.

### <Measurement Results of Dimensional Change Rate>

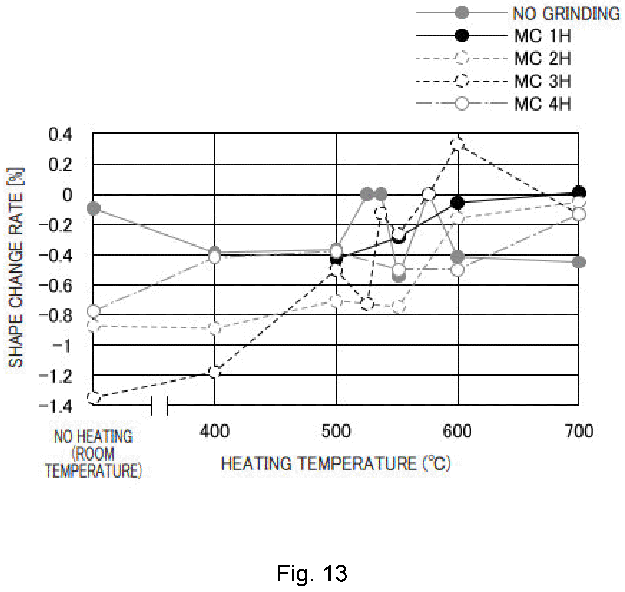

Fig. 13 is a diagram illustrating measurement results of shape change rate (dimensional change rate). The horizontal axis of Fig. 13 represents heating temperature (°C) of unburned carbon removal treatment, and the vertical axis represents dimensional change rate (%).

Note that a positive value (greater than 0) of the vertical axis (shape change rate) in the figure indicates that the test piece expanded, and when a negative value (smaller than 0) indicates that the test piece shrank.

From the figure, in the coal ash heated at 500°C or higher, such a tendency was observed that shrinkage was able to be suppressed by being subjected to grinding treatment. Particularly, in a range of 550°C to 600°C, the coal ash subjected to grinding treatment of 3 hours resulted in the shape change rate changing from negative (shrinkage) to positive (expansion).

From the above results, by heating coal ash at 500 to 600°C (in other words, reducing unburned carbon to 1% to 0.1%), flow immediately after mixing increased, and particularly with 550°C heating, the flow reached a maximum. Further, in terms of change in viscosity over time, time until hardening could be extended compared to the case without heating. Thus, it was confirmed that workability can be improved by removing unburned carbon from coal ash.

Further, it was also confirmed that shrinkage can be suppressed by heating at 500 to 600°C and applying grinding treatment.

Further, it was confirmed that a grinding treatment time of about 3 hours is suitable (grinding time can be shortened compared to the conventional examples).

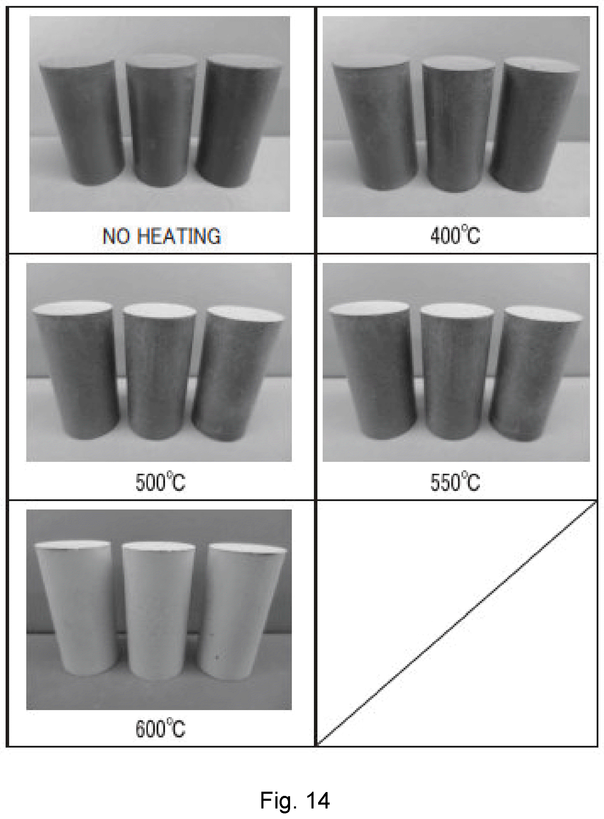

Further, Fig. 14 is a diagram illustrating appearance of prepared test pieces. In the case without heating (without unburned carbon removal treatment), the test pieces were black, a change to a lighter color tone was observed in heating treatment at 550°C, and at 600°C, the test pieces exhibited a color tone close to substantially white. Thus, by removing unburned carbon by heating treatment (unburned carbon removal treatment), the hardened body becomes closer to white, which enables freedom of coloring and the like.

### === Other embodiments ===

Embodiment(s) described above is/are simply to facilitate understanding of the present disclosure and is/are not in any way to be construed as limiting the present disclosure. The present disclosure may variously be changed or altered without departing from its essential features and encompass equivalents thereof.

In the aforementioned embodiment, treatment using a planetary ball mill was exemplified as mechanochemical treatment, but treatment is not limited thereto as long as the surface of coal ash can be activated.

Further, in the aforementioned embodiment, a potassium hydroxide solution was used as the strong alkaline solution, but it is not limited thereto, and a sodium hydroxide solution obtained by dissolving sodium hydroxide in water may also be used. Further, the concentration of the strong alkaline solution is also not limited to 3 mol/L.

Further, regarding the self-hardening material, fine aggregate may be added to form a mortar, or fine aggregate and coarse aggregate may be added to form concrete (cementless concrete).

Further, in the step of mixing coal ash (fly ash) and the silicon mixture (slurry) (step S2), other materials (for example, a water reducing agent or retarder for adjusting the time until hardening, a shrinkage reducing agent for preventing cracking, and/or the like) may be further mixed.

## Claims

1. A method for producing a self-hardening material, comprising:
a first step of subjecting fly ash to unburned carbon removal treatment to produce unburned carbon removal-treated fly ash;
a second step of subjecting the unburned carbon removal-treated fly ash to mechanochemical treatment to activate a surface of the unburned carbon removal-treated fly ash;
a third step of mixing a strong alkaline solution and silicon fine powder to prepare a silicon mixture in which a silicon component is dissolved in the strong alkaline solution; and
a fourth step of mixing the unburned carbon removal-treated fly ash whose surface has been activated and the silicon mixture.

2. The method for producing a self-hardening material according to claim 1, wherein,
in the first step, a content rate of the unburned carbon in the unburned carbon removal-treated fly ash is 1% or less.

3. The method for producing a self-hardening material according to claim 1, wherein
the unburned carbon removal treatment is heating treatment of heating the fly ash.

4. The method for producing a self-hardening material according to claim 3, wherein
the heating treatment is performed within 1 hour using a heating apparatus.

5. The method for producing a self-hardening material according to claim 3, wherein
a temperature of the heating treatment is 500°C or higher and 600°C or lower.

6. The method for producing a self-hardening material according to claim 1, wherein
a ratio of the strong alkaline solution to a binder containing the unburned carbon removal-treated fly ash and the silicon fine powder is 25% or more and 40% or less.

7. The method for producing a self-hardening material according to claim 6, wherein
a proportion of the unburned carbon removal-treated fly ash in the binder is 90% or more.

8. The method for producing a self-hardening material according to claim 1, wherein
a silicon concentration in the silicon fine powder is 40,000 PPM or more.

9. The method for producing a self-hardening material according to any one of claims 1 to 8, wherein
the self-hardening material does not contain cement.
